# EUROPEAN PATENT APPLICATION

(11) **EP 4 047 132 A1**
(43) Date of publication of application: **24.08.2022**
(21) Application number: 22156261.4
(22) Date of filing: 11.02.2022
(51) Int. Cl.: E01F 13/02, F16B 7/04, E04H 17/18, E04F 13/02

(54) **BARRIER ASSEMBLY WITH A NOTCH**

(30) Priority: 22.02.2021 IT 202100004040
(71) Applicant: 32B S.r.l., 20129 MILANO (IT)
(72) Inventor: MANDELLI, Cristiano, 23873 MISSAGLIA (LC) (IT)
(74) Representative: Mittler, Andrea

(57) **Abstract**

A barrier assembly (1) is described, comprising at least one barrier (2) and a joint (3). The barrier (2) comprises at least two vertical tubes (4) and two horizontal tubes (5), wherein the vertical tubes (4) are coupled to the horizontal tubes (5). Each vertical tube (4) is provided with a notch (7) on the side edge, which horizontally covers a predefined angle around the vertical axis of the vertical tube (4). The joint (3) comprises at least two hugging bodies (8) which are suitable for being coupled to vertical tubes (4), and two teeth (9), protruding from the respective hugging body (8), which are suitable for being slidingly coupled to the notch (7) of the respective vertical tube (4).

## Description

The present invention relates to a barrier assembly with a notch.

A barrier assembly is a movable barrier which is suitable for delimiting or dividing a space outdoors, or an environment, preferably consisting of a series of modules (barriers) made of wood or metal, generally from one to two meters high. The barrier is used, for example, as a barrier in public areas or spaces for regulating the traffic or delimiting areas reserved for public access or transit.

Using the barrier requires particular attention to transportability, assembly and disassembly.

In essence, a barrier assembly is a modular structure preferably consisting of a plurality of barriers coupled two by two by means of joints.

FR-1297804 describes a modular barrier assembly consisting of adjacent barriers coupled by means of two joints. Each joint comprises a closed ring and an open ring which are suitable for being coupled to two vertical tubes of adjacent barriers. The open ring includes a seat for a protrusion of the vertical tube to which it is coupled.

Disadvantageously, only one barrier can rotate with respect to the joint. Furthermore, one vertical tube of each barrier must have a very particular seat which requires a careful machining for a precise coupling.

US-2004206945 discloses a barrier and two joints which are suitable for being coupled to an adjacent barrier. Each joint is fixed with screw means to a vertical tube of the barrier and includes a C-shaped portion which is suitable for being coupled to the vertical tube of the adjacent barrier. The barrier comprises two feet, each of which includes a vertical tube with a Z-shaped notch which is suitable for fixing the foot to the vertical tube of the barrier.

Disadvantageously, the joint requires screw fixing means which make it integral with one of the two adjacent barriers. Furthermore, it is necessary to assemble support feet with a notch having a shape complicated to obtain.

JP-3806519 discloses a barrier fixed to the ground by means of vertical poles. The barrier comprises horizontal tubes including a notch at the ends. Said notch extends vertically and is suitable for creating a seat for protrusions of a joint fixed to a pole placed between two barrier units. A mutual rotation of two adjacent barrier units is allowed only after a deformation of the protrusions of the joint.

Disadvantageously, it is necessary to use a pole which is integral with the ground and makes the barrier only suitable for fixed installations. Furthermore, the deformation limits the resistance of the protrusions.

WO-2019/016758 describes a barrier assembly comprising at least one barrier and one joint.

It is an object of the present invention to provide a modular barrier assembly which is easily transportable.

It is a further object of the present invention to provide a barrier assembly which is simple to assemble and disassemble, with few lightweight components.

It is a still further object of the present invention to provide a barrier assembly comprising a joint which is suitable for coupling two adjacent barriers so that each barrier can rotate with respect to the joint.

According to the invention, said and further objects are achieved by a barrier assembly, comprising at least one barrier and one joint, characterized in that
the barrier comprises at least two vertical tubes and two horizontal tubes, wherein the vertical tubes are coupled to the horizontal tubes,
each vertical tube is provided with a notch on the side edge that horizontally covers a predefined angle around the vertical axis of the vertical tube,
the joint comprises at least two hugging bodies which are suitable for being coupled to vertical tubes, and two teeth, protruding from the respective hugging body, which are suitable for being slidingly coupled to the notch of the respective vertical tube,
wherein said predefined angle must be suitable for allowing at least a rotation of the vertical tube with respect to the hugging body in which the vertical tube is housed.

Advantageously, the barrier assembly can be sold in single modules (barriers) of different sizes. The packaging is minimal and allows a significant reduction in the transport costs.

The barrier assembly is self-supporting: for example, by creating an angle between two consecutive barriers, the support feet are not required.

The barrier assembly is transportable when already assembled: after being folded, it can be stored in any space and environment.

These and other features of the present invention will become more apparent from the following detailed description of practical embodiments thereof, shown by way of non-limiting example in the accompanying drawings, in which:
figure 1 shows a perspective view of a barrier assembly according to the present invention;
figure 2 shows a top plan view of the barrier assembly;
figure 3 shows a perspective view of the barrier assembly in a folded configuration;
figure 4 shows an exploded front view of a barrier assembly consisting of a barrier and a joint;
figure 5 shows a perspective view of a portion of a vertical tube of the barrier assembly;
figure 6 shows a first side view of the vertical tube portion;
figure 7 shows a second side view of the vertical tube portion, rotated by 90° with respect to the first side view;
figure 8 shows a sectional view along line VIII-VIII of figure 7;
figure 9 shows a perspective view of a joint of the barrier assembly;
figure 10 shows a top plan view of the joint;
figure 11 shows a right-hand or left-hand view of the joint as depicted in figure 10;
figure 12 shows a perspective view of the joint coupled to the vertical tube portion;
figure 13 shows a side view of the joint coupled to the vertical tube portion;
figure 14 shows a sectional view along line XIV-XIV of figure 13;
figure 15 shows a perspective view of the barrier assembly, according to a second embodiment;
figure 16 shows a perspective view of the barrier assembly of figure 15, in a different configuration;
figure 17 shows a front view of a barrier of a barrier assembly, according to a different embodiment;
figure 18 shows a top plan view of the barrier of figure 17.

A barrier assembly 1 comprises two barriers 2 and a joint 3 which is suitable for coupling the two barriers 2.

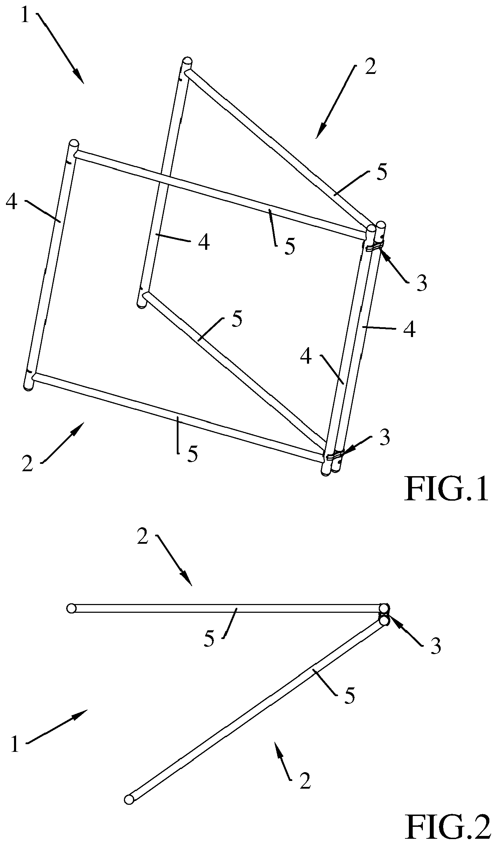

Each barrier 2 comprises at least two vertical tubes 4 and two horizontal tubes 5 (figures 1-4).

The vertical tubes 4 is rounded in shape, while the horizontal tubes 5 can be rounded or square in shape.

The horizontal tubes 5 are fixed to the vertical tubes 4 by virtue of threaded bushings 6. Once assembled, the two vertical tubes 4 and the two horizontal tubes 5 form a robust and load-bearing barrier 2, with which advertising means, made of fabric, PVC or metal (such as aluminum) can be engaged.

Rubber pads 20, preferably spherical in shape, are placed at the ends of the vertical tubes 4, those at the bottom allowing support in all terrain conditions, even rugged.

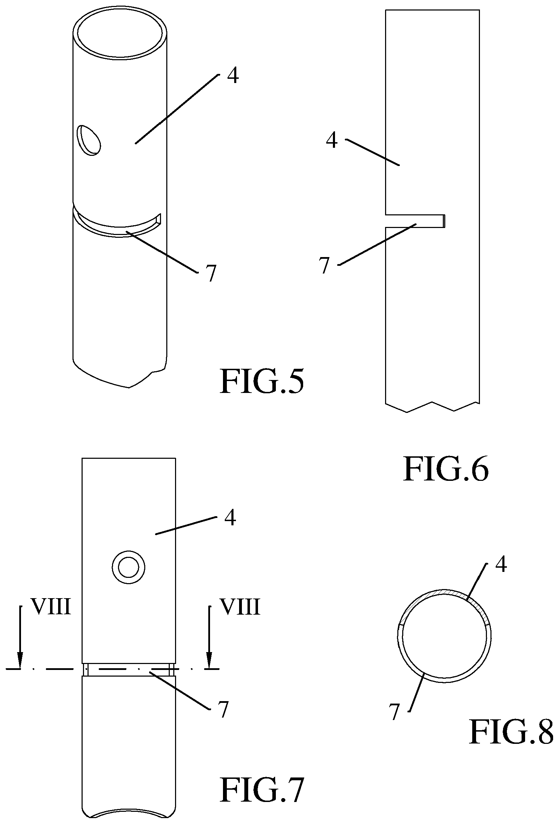

Each vertical tube 4 is provided with a notch 7 on the side edge that horizontally covers a predefined angle around the vertical axis of the vertical tube 4, wherein said angle has its vertex on said vertical axis (figures 5-8).

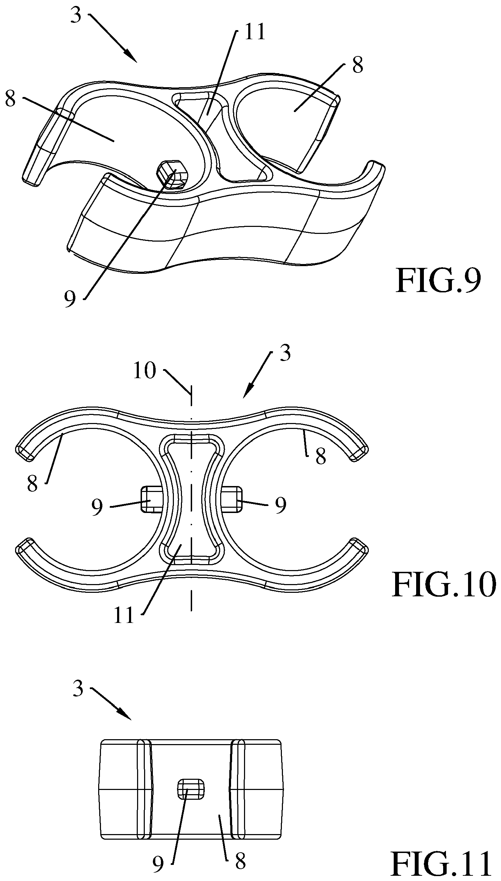

The joint 3 includes two open rings 8, namely C-shaped portions, which are suitable for being coupled to vertical tubes 4 of adjacent barriers 2. A tooth 9 is provided inside each open ring 8, protruding from an edge of the open ring 8, which is suitable for being coupled to the notch 7 of the respective vertical tube 4 (figures 9-11).

The notch 7 extends horizontally with respect to the vertical axis of the vertical tube 4, around said vertical axis, and has a minimum height for housing the tooth 9, namely the height of the notch 7 is only slightly greater than the height of the tooth 9.

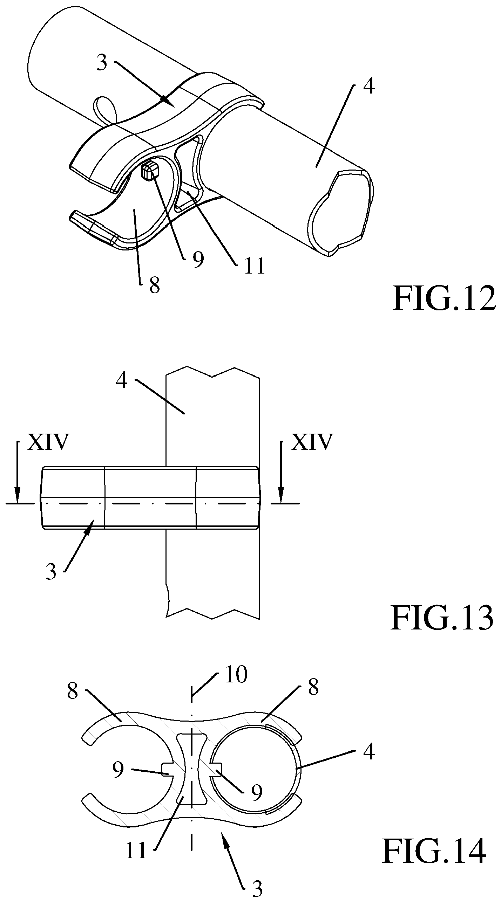

Therefore, the notch 7 is a seat for the tooth 9 which can move along the internal angle covered by the notch 7 (figures 12-14).

Said angle must be suitable for allowing at least a rotation of the vertical tube 4 with respect to the open ring 8 in which the vertical tube 4 is housed. Therefore, the length of the notch 7 along the side surface of the vertical tube 4 around the vertical axis of the vertical tube 4 must be such as to cover at least one angle of 30°, for example.

Preferably, the length of the notch 7 must be such as to allow at least a rotation of 180° of the vertical tube 4 with respect to the open ring 8 which houses the vertical tube 4, namely the notch 7 must cover at least one angle of about 210° so as to take into account the width of the tooth 9.

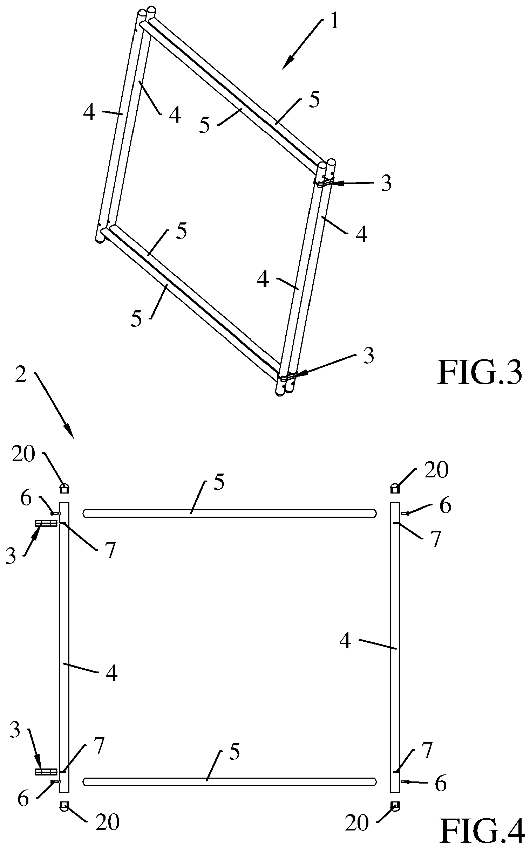

As a consequence, in the preferred embodiment depicted in the figures, two adjacent barriers 2 coupled to the same joint 3 can each rotate by 180°, therefore also taking a fully folded configuration (figure 3) in which one barrier 2 completely overlaps the other barrier 2, wherein the vertical tubes 4 and the horizontal tubes 4 of the respective barriers 2 overlap. A compact configuration is obtained, which is useful for transporting the barrier assembly 1 already assembled.

The folded configuration can be obtained even if the predefined angle is such as to allow a 90° rotation in opposite directions. However, it is preferable to allow a 180° rotation because it is possible to obtain the folded configuration by rotating in both directions without difficulty in orienting the vertical tubes 4 during assembly.

Preferably, the notch 7 passes through the side edge of the vertical tube 4 which is internally hollow.

Preferably, the two open rings 8 mirror each other with respect to a median axis 10, wherein the two teeth 9 protrude in an orthogonal direction to said median axis 10, in opposite directions, facing the openings of the open rings 8 but still inside the open rings 8.

Preferably, the joint 3 has a central through opening 11 which is suitable for making the joint 3 lighter and more flexible.

Advantageously, the joint 3 allows the barrier 2 to rotate with respect to the joint 3 around a vertical axis (the axis of a vertical tube 4 coupled to the joint 3), by an angle of 180°.

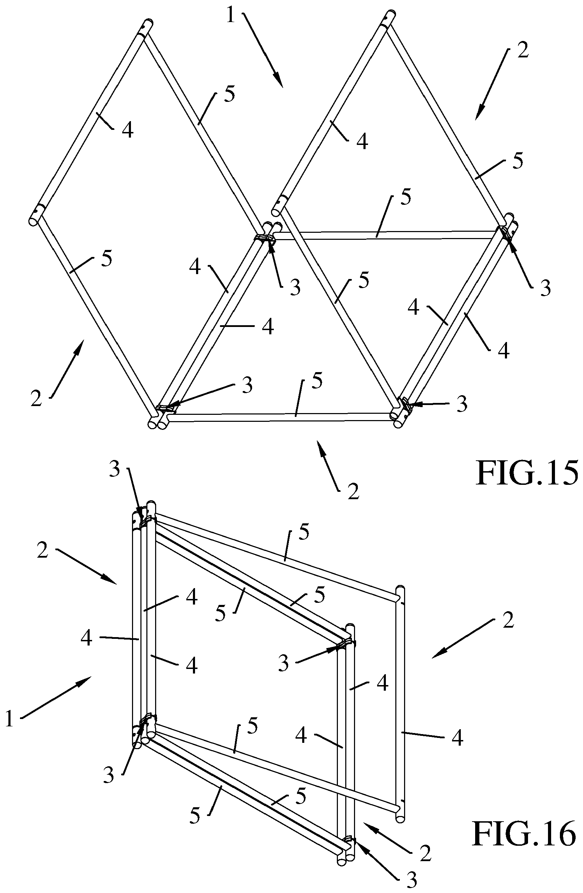

Different configurations of the barrier assembly 1 can be obtained, as shown in figures 15-16 in which three barriers 2 are coupled to two pairs of joints 3.

Advantageously, the barrier assembly 1 can be sold in single modules (barriers 2) of different sizes. The packaging is minimal and allows a significant reduction in the transport costs.

The barrier 2 can be made of aluminum, iron, stainless steel, plastic materials, carbon.

The joint 3 is made of a flexible material to allow the engagement (hugging) with the vertical tube 4, preferably of a plastic material, e.g., nylon or polypropylene.

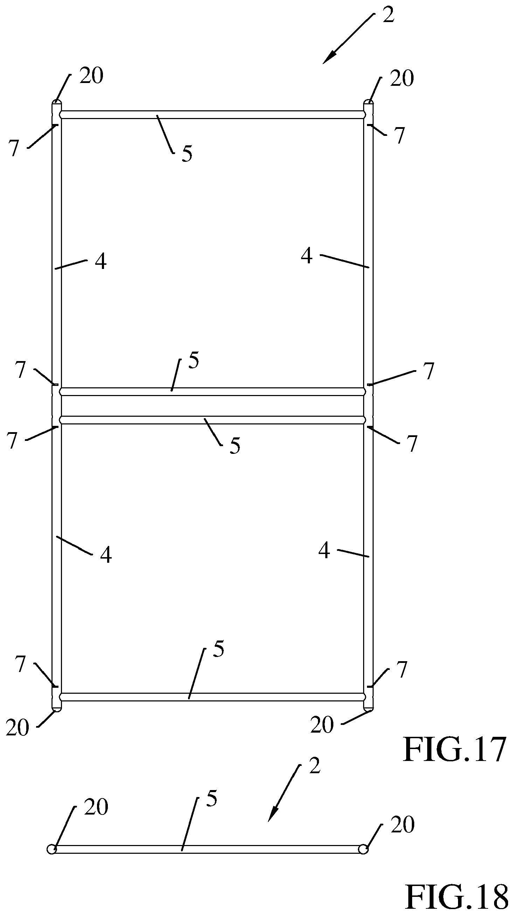

Heights and widths of each type can be managed, even by alternating the heights of the barrier assembly 1. For example, the barrier 2 can also have a double height, as shown in figure 17, wherein there are vertical tubes 4 with a double height and four horizontal tubes 5.

The barrier assembly 1 is self-supporting: by creating an angle between two consecutive barriers 2, support feet are not required.

The barrier assembly 1 is transportable when already assembled: after being folded, it can be stored in any space and environment.

The barrier assembly 1 is usable for people separation, safety signaling, visual marketing communication, as an enclosure, e.g., for dog and cat puppies.

A PVC tip with a threaded insert can be inserted in place of the rubber pad 20 at the lower end of the vertical tubes 4. In this case, round or rectangular dish-shaped plates can be anchored, making the barrier assembly 1 stable. Alternatively, at the bottom, stakes for inserting the barrier assembly 1 into the ground, plates with holes for screwing them to the ground, or wheels for allowing mobility on wheels can also be applied.

PVC tips can also be inserted in place of the rubber pads 20 at the upper end of the vertical tubes 4, having a threaded insert for screwing LED bars which would allow visual signaling, such as flashing yellow LEDs, for example. On a marketing level, LED bars could be used for lighting the panels or coordinating a colorful lighting, both fixed and flashing.

At the upper end of the vertical tubes 4, it is also possible to anchor LED lamps, particular signs, sanitizing gel dispenser holders, table tops which would turn the barrier assembly 1 into a counter or display unit, modular structures for movable rubbish bins, or other accessories.

Alternatively, the joint 3 can comprise a third open ring 8 for the engagement with three vertical tubes 4 of three barriers 2. In this case, the three open rings 8 can be angularly equidistant, namely at an angular distance of 120° from each other, wherein a mirroring configuration with respect to a median axis as described in the preferred embodiment shown in figure 10 is not identifiable.

Alternatively, the joint 3 can include two closed rings, in which vertical tubes 4 can be inserted, from the top or from the bottom. Each closed ring comprises a through hole, possibly threaded, through which a pin is insertable (a screw if the hole is threaded), which forms a tooth for the coupling to the notch 7 of the vertical tube 4. In the absence of threaded coupling, the pin can simply be snap-coupled to the through hole of the closed ring. In this alternative embodiment of the barrier assembly 1, preferably, the notch 7 faces towards the space between two vertical tubes 4 of the barrier 2 and the threaded through hole is in the opposite position with respect to the tooth 9 of the joint 3 with the open rings 8.

The open or closed rings of the joint 3 are generally hugging bodies which are suitable for wrapping a vertical tube 4 which then passes through the hugging body.

Note that the barrier assembly 1 necessarily comprises a barrier 2 and a joint 3, but not a second barrier 2. In fact, the joint 3 can be used for the connection with a tube provided with the notch 7, but which is not part of a barrier 2. The tube can be suitable for supporting accessories, such as a suction cup, an ashtray, a sanitizing gel dispenser, for example. The barrier assembly 1 can remain standing even without a second barrier 2: for example, with a tube reaching however the ground, or by means of feet at the base of the vertical tubes 4 of the single barrier 2.

## Claims

1. Barrier assembly (1) comprising at least a barrier (2) and a joint (3), **characterized in that**
each barrier (2) comprises at least two vertical tubes (4) and two horizontal tubes (5), wherein the vertical tubes (4) are coupled to the horizontal tubes (5),
each vertical tube (4) is provided with a notch (7) on the side edge that horizontally covers a predefined angle around the vertical axis of the vertical tube (4),
the joint (3) comprises at least two hugging bodies (8) suitable for coupling with vertical tubes (4), and two teeth (9), protruding from an edge of the respective hugging body (8) inside the hugging body (8), suitable for slidingly coupling with the notch (7) of the respective vertical tube (4),
wherein said predefined angle must be suitable to allow at least a rotation of the vertical tube (4) with respect to the hugging body (8) in which the vertical tube (4) is housed.

2. Barrier assembly (1) according to claim 1, **characterized in that** the two hugging bodies (8) are mirrored with respect to a median axis (10) of the joint (3), wherein the two teeth (9) protrude in a direction orthogonal to said median axis (10), in opposite senses.

3. Barrier assembly (1) according to claim 1 or 2, **characterized in that** said predefined angle is able to allow at least a rotation of 180° of the vertical tube (4) with respect to the hugging body (8) which houses the vertical tube (4).

4. Barrier assembly (1) according to any one of the preceding claims, **characterized in that** the hugging body (8) is an open ring.

5. Barrier assembly (1) according to any one of claims 1-3, **characterized in that** the hugging body (8) is a closed ring.

6. Barrier assembly (1) according to claim 5, **characterized in that** each closed ring comprises a through hole through which a pin, which constitutes a tooth (9) for coupling with the notch (7) of the vertical tube (4), is insertable.

7. Barrier assembly (1) according to any one of the preceding claims, **characterized in that** it comprises at least two barriers (2).

8. Barrier assembly (1) according to any one of the preceding claims, **characterized in that** the joint (3) has a central through opening (11) between the two hugging bodies (8).

9. Barrier assembly (1) according to any one of the preceding claims, **characterized in that** at the lower end of the vertical tubes (4) are alternatively mounted: rubber pads (20), PVC ferrules with threaded insert, pegs for inserting the barrier (1) into the ground, plates with holes to screw them to the ground, wheels to allow mobility on wheels.

10. Barrier assembly (1) according to any one of the preceding claims, **characterized in that** at the upper ends of the vertical tubes (4) are alternatively mounted: rubber pads (20), PVC ferrule with threaded insert where you can screw LED bars, LED lamps, signs, sanitizing gel dispenser holders, table tops, modular structures for garbage cans.
